# EUROPÄISCHE PATENTSCHRIFT

(11) **EP 2 115 394 B1**
(45) Veröffentlichungstag und Bekanntmachung des Hinweises auf die Patenterteilung: **29.10.2014**
(21) Anmeldenummer: 08707387.0
(22) Anmeldetag: 30.01.2008
(51) Int. Cl.: G01D 5/20

(54) **BEDIENVORRICHTUNG UND VERFAHREN ZUR ERZEUGUNG VON AUSGANGSSIGNALEN DERSELBEN**
OPERATING DEVICE AND METHOD FOR GENERATING OUTPUT SIGNALS THEREFROM
DISPOSITIF DE COMMANDE ET PROCÉDÉ DE GÉNÉRATION DE SIGNAUX DE SORTIE DUDIT DISPOSITIF

(30) Priorität: 07.03.2007 DE 102007011064
(43) Veröffentlichungstag der Anmeldung: 11.11.2009
(73) Patentinhaber: paragon AG, 33129 Delbrück (DE)
(72) Erfinder: MÖNKEMÖLLER, Ralf, 33335 Gütersloh (DE)
(74) Vertreter: Lelgemann, Karl-Heinz
(86) Internationale Anmeldenummer: PCT/EP2008/000686
(87) Internationale Veröffentlichungsnummer: WO 2008/107047

(56) Entgegenhaltungen:
- WO-A-03/078871

## Beschreibung

Die Erfindung bezieht sich auf eine Bedienvorrichtung mit einem verstellbaren Hebel und einer Sensorik, zu der eine Geberspule, die mittels einer Wechselstromquelle mit einem Wechselstrom beaufschlagbar ist, und eine Empfangsspulenanordnung gehören, und auf ein Verfahren zur Erzeugung von Ausgangssignalen mit einer derartigen Bedienvorrichtung, bei dem die Geberspule mit Wechselstrom beaufschlagt wird und die Geberspule und die Empfangsspulenanordnung relativ zueinander bewegt werden, so dass in der Empfangsspulenanordnung Signale erzeugt werden.

Bei einer derartigen Bedienvorrichtung bzw. einem entsprechenden Verfahren wird die Geberspule aktiv bestromt. Sie arbeitet daher mit deutlich höheren Nutzsignalen als aus dem Stand der Technik bekannte passive Bedienvorrichtungen, bei denen ein elektrischer Anschluss der Geberspule an einer Stromquelle nicht vorgesehen ist. Die letzteren bekannten Bedienvorrichtungen können nach dem Transponderprinzip arbeiten, d.h., eine Spannung wird induziert und ein entsprechendes Signal zurückgesendet. Bei Bedienvorrichtungen, die entsprechend einem weiteren aus dem Stand der Technik bekannten Prinzip arbeiten, werden Antennenspulen von einem Strom durchflossen und die durch die elektromagnetische Ankopplung der Geberspule verursachten Stromflussänderungen ausgewertet. Das Dokument WO 03/078871 A1 beschreibt solch eine Bedienvorrichtung. Außerdem sind Bedienvorrichtungen aus dem Stand der Technik bekannt, bei denen statt einer Geberspule magnetische Dämpfungseinrichtungen eingesetzt werden, die durch die magnetische Ankopplung Veränderungen in den Empfangsspulen hervorrufen. Den passiv arbeitenden Bedienvorrichtungen ist gemein, dass die auswertbaren Signaländerungen vergleichsweise klein sind. Hierdurch sind empfindliche Aufnahmeschaltungen notwendig, die bei vergleichsweise intensiven Störsignalen schnell übersteuern und die gesamte Bedienvorrichtung unnutzbar machen können.

Zum Beispiel im Kraftfahrzeugbereich dürfen nur Bedienvorrichtungen eingesetzt werden, die aus Sicherheitsgründen eine sehr hohe Verfügbarkeit gewährleisten müssen, wobei gleichzeitig intensive Störsignale im Betrieb auftreten können. Hierdurch werden bei den vorstehend geschilderten gängigen passiven Bedienvorrichtungen zumindest technisch-konstruktiv aufwendige Maßnahmen zur Abschirmung erforderlich. Zu der eingangs geschilderten Bedienvorrichtung ist festzustellen, däss diese aufgrund der aktiven Bestromung ihrer Geberspule mit deutlich höheren Nutzsignalen als die vorstehend geschilderten passiven Bedienvorrichtungen arbeitet. Die Geberspule wird im Falle der mit aktiver Bestromung arbeitenden Bedienvorrichtung mit Signalamplituden von einigen Volt beaufschlagt, wohingegen die genannten passiven Bedienvorrichtungen mit Signalamplituden im niedrigen Millivolt-Bereich arbeiten.

Der Erfindung liegt die Aufgabe zugrunde, die eingangs geschilderte Bedienvorrichtung bzw. ein mittels dieser realisierbares Verfahren zur Erzeugung eines Ausgangssignals derart weiterzubilden, dass sie bzw. es auch in Umgebungen, z.B. im Kraftfahrzeugbereich, einsetzbar ist, in denen intensive Störsignale in vielen unterschiedlichen Frequenzen auftreten können.

Diese Aufgabe wird hinsichtlich der Bedienvorrichtung dadurch gelöst, dass die Frequenz des die Geberspule beaufschlagenden Wechselstroms und die Durchgangsfrequenz eines Empfangsfilters der Empfangsspulenanordnung mittels einer Steuereinheit entsprechend einem vorgebbaren Programm synchron veränderbar sind. Entsprechend ergibt sich die Lösung hinsichtlich des Verfahrens zur Erzeugung von Ausgangssignalen einer Bedienvorrichtung dadurch, dass die Frequenz des die Geberspule beaufschlagenden Wechselstroms und die Durchgangsfrequenz eines Empfangsfilters der Empfangsspulenanordnung entsprechend einem vorgebbaren Programm synchron verändert werden.

Vorteilhaft ist die Geberspule am Hebel fest angeordnet und gemeinsam mit dem Hebel in Bezug auf die ortsfeste Empfangsspulenanordnung verstellbar.

Eine besonders vorteilhafte Ausgestaltung der erfindungsgemäßen Bedienvorrichtung wird erzielt, wenn die Geberspule an einem einem Betätigungsabschnitt des Hebels entgegengesetzten Endabschnitt desselben und die Empfangsspulenanordnung unterhalb dieses Endabschnitts angeordnet sind. Die Sensorik der erfindungsgemäßen Bedienvorrichtung kann so ohne aufwendige technisch-konstruktive Maßnahmen in gängige Bedienvorrichtungen integriert werden, ohne dass diese gängigen Bedienvorrichtungen grundsätzlich anders konstruiert werden müssten.

Wenn das Empfangsfilter der Empfangsspulenanordnung extrem schmalbandig ausgelegt und genauestens auf die Frequenz des die Geberspule beaufschlagenden Wechselstroms abgestimmt ist, kann eine hohe Unempfindlichkeit gegen Störungen bzw. Störsignale erreicht werden, die nicht ganz eng bzw. ganz nah an der Frequenz einer Oszillatorschaltung der Stromquelle liegen.

Um die erfindungsgemäße Bedienvorrichtung bei einem Auftreten von Störungen bzw. Störsignalen im Bereich einer für den die Geberspule beaufschlagenden Wechselstrom und das Empfangsfilter der Empfangsspulenanordnung eingestellten Frequenz weiterhin ohne großen Aufwand nutzen zu können, ist es zweckmäßig, wenn die Frequenz des Wechselstroms und die Durchgangsfrequenz des Empfangsfilters programmgesteuert solange synchron veränderbar sind, bis eine störungs- bzw. störsignalfreie Frequenz vorliegt. Im Falle der erfindungsgemäßen Bedienvorrichtung bzw. des entsprechenden erfindungsgemäßen Verfahrens wird somit automatisch auf eine von Störsignalen nicht beeinflusste freie Frequenz ausgewichen.

Gemäß einer weiteren vorteilhaften Ausführungsform ist die Steuereinheit der erfindungsgemäßen Bedienvorrichtung so ausgestaltet, dass die Frequenz des Wechselstroms und des Empfangsfilters periodisch veränderbar ist und dass für die Erzeugung eines Ausgangssignals der Bedienvorrichtung nur bei störungs- bzw. störsignalfreien Frequenzen erfasste Signale der Empfangsspulenanordnung verwertbar sind. Hierdurch kann die Ausgabe irgendwelcher, auf gestörten Messsignalen basierende Ausgangssignale der Bedienvorrichtung sicher ausgeschlossen werden. Darüber hinaus können so durch internen Vergleich der erfassten Signale bei den unterschiedlichen Frequenzen gestörte Frequenzen erkannt werden. Sofern einzelne Frequenzen dauerhaft gestört sind, kann sichergestellt werden, dass bei diesen Frequenzen erfasste Signale im Betrieb der Bedienvorrichtung nicht zur Grundlage der Erzeugung von Ausgangssignalen gemacht werden.

Das Empfangsfilter der erfindungsgemäßen Bedienvorrichtung kann vorteilhafterweise einen Synchrongleichrichter aufweisen.

Die Wechselstromquelle der erfindungsgemäßen Bedienvorrichtung kann zur technisch-konstruktiv wenig aufwendigen Weise mit einer Oszillatorschaltung versehen sein.

Bei der Durchführung des erfindungsgemäßen Verfahrens kann die Geberspule vorteilhaft mit Wechselstrom mit Signalamplituden von einem bis einigen Volt beaufschlagt werden, so dass schon aufgrund der entsprechend höheren Nutzsignale das erfindungsgemäße Verfahren im Vergleich zum Stand der Technik erheblich robuster ist.

Bei dem erfindungsgemäßen Verfahren können bei einem Auftreten von Störungen bzw. Störsignalen die Frequenz des Wechselstroms und des Empfangsfilters programmgesteuert solange synchron verändert werden, bis eine störungs- bzw. störsignalfreie Frequenz eingestellt ist.

Um das erfindungsgemäße Verfahren noch sicherer zu gestalten, kann die Frequenz des Wechselstroms und des Empfangsfilters periodisch verändert werden. Die Signale der Empfangsspulenanordnung werden bei unterschiedlichen Frequenzen erfasst und ein Ausgangssignal der Bedienvorrichtung nur aus solchen Signalen der Empfangsspulenanordnung erzeugt bzw. errechnet, die bei störungs- bzw. störsignalfreien Frequenzen erfasst wurden.

Eine weitere Erhöhung der Sicherheit des erfindungsgemäßen Verfahrens ist erreichbar, wenn ein Ausgangssignal der Bedienvorrichtung nur erzeugt wird, wenn ein Signal der Empfangsspulenanordnung bei einer vorgebbaren Anzahl unterschiedlicher Frequenzen des Wechselstroms und des Empfangsfilters das gleiche Ergebnis ergibt.

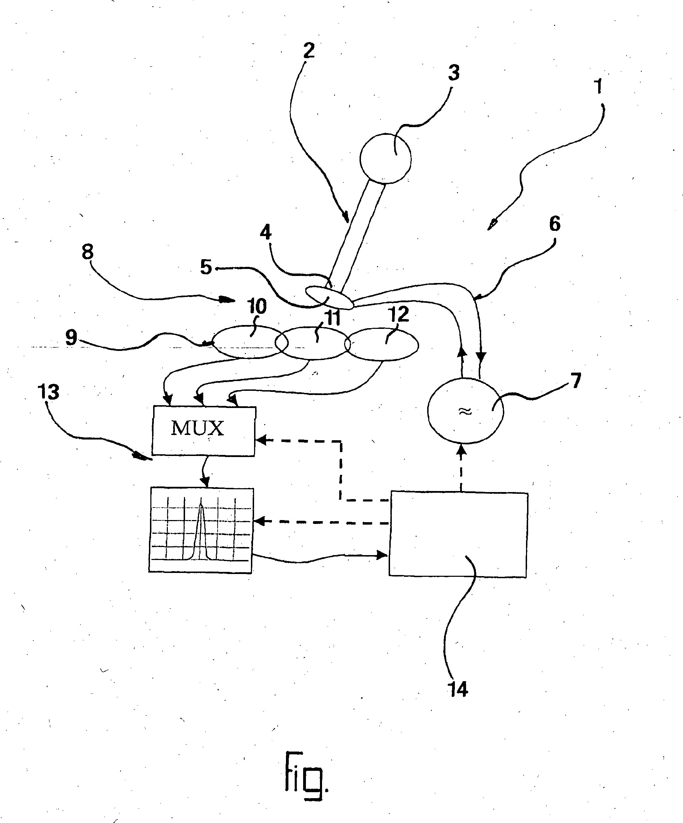

Im Folgenden wird die Erfindung anhand einer Ausführungsform unter Bezugnahme auf die Zeichnung näher erläutert, deren einzige Figur ein Ausführungsbeispiel für eine erfindungsgemäße Bedienvorrichtung prinzipiell darstellt.

Eine in der einzigen Figur gezeigte Ausführungsform einer erfindungsgemäßen Bedienvorrichtung 1 hat einen verstellbaren Hebel 2, der in unterschiedlichen Richtungen bewegbar ist. Der Schalthebel bzw. Hebel 2 hat zur Betätigung desselben einen im dargestellten Ausführungsbeispiel als Rundknauf ausgebildeten Betätigungsabschnitt 3. Durch Verschieben des Betätigungsabschnitts 3 ist der Hebel 2 um einen Fixpunkt verdreh- bzw. verschwenkbar, wobei Dreh- bzw. Schwenkbewegungen in unterschiedlichen Richtungen möglich sind.

An seinem dem Betätigungsabschnitt 3 entgegengesetzten Endabschnitt 4 ist der Hebel 2 mit einer Geberspule 5 versehen, die gemäß der Bewegung des Hebels 2 mittels dessen Betätigungsabschnitt 3 ihre räumliche Position in der Bedienvorrichtung 1 verändert.

Die Geberspule 5 wird im Falle der erfindungsgemäßen Bedienvorrichtung 1 aktiv bestromt, d.h. sie wird mit einem Wechselstrom beaufschlagt. Hierzu ist die Geberspule 5 mittels einer Leitungsverbindung 6 an eine Wechselstromquelle 7 angeschlossen. Aufgrund der aktiven Bestromung der Geberspule 5 arbeitet letztere mit deutlich höheren Nutzsignalen als derartige Bauteile passiver Systeme. Die Geberspule 5 wird mit Signalamplituden in Höhe von einigen Volt beaufschlagt, wohingegen die entsprechenden Signalamplituden passiver Systeme sich im Bereich von vergleichsweise niedrigen Millivolt bewegen. Zu der Wechselstromquelle 7 gehört im Falle des in der einzigen Figur gezeigten Ausführungsbeispiels eine Oszillatorschaltung.

Außer durch die Geberspule 5 wird eine Sensorik 8 der Bedienvorrichtung 1 durch eine Empfangsspulenanordnung 9 gebildet, die im Falle des in der einzigen Figur gezeigten Ausführungsbeispiels der erfindungsgemäßen Bedienvorrichtung 1 durch drei Empfangsspulen 10, 11, 12 realisiert ist.

Der mittels der mit der Oszillatorschaltung ausgerüsteten Wechselstromquelle 7 erzeugte Wechselstrom beaufschlagt die Geberspule 5 des Hebels 2. Der die Geberspule 5 durchfließende Wechselstrom induziert aufgrund der magnetischen Kopplung in den Empfangsspulen 10, 11, 12 der Empfangsspulenanordnung 9 einen Wechselstrom mit der gleichen Frequenz.

Der Empfangsspulenanordnung 9 nachgeschaltet ist ein Empfangsfilter 13 mit einer verstellbaren Durchgangsfrequenz. Zur Verstellung der Durchgangsfrequenz des Empfangsfilters 13 und der Frequenz des durch die Wechselstromquelle 7 erzeugten Wechselstroms dient eine Steuereinheit 14, mittels der die Durchgangsfrequenz des Empfangsfilters 13 und die Frequenz des seitens der Wechselstromquelle 7 erzeugten Wechselstroms gemäß einem quasi beliebig vorgebbaren Programm synchron veränderbar sind.

Die Durchgangsfrequenz des der Empfangsspulenanordnung 9 zugeordneten Empfangsfilters 13 ist extrem schmalbandig ausgelegt und exakt auf die Frequenz der Oszillatorschaltung der Wechselstromquelle 7 eingestellt. Somit ist die Bedienvorrichtung 1 extrem unempfindlich gegen Signalstörungen, die nicht nahe an der Frequenz der Oszillatorschaltung liegen.

Wenn ein starkes Störsignal nahe bzw. auf der Frequenz der Oszillatorschaltung auftritt, wird in einer der Steuereinheit 14 zugehörigen Signalauswertung festgestellt, dass das mittels des Störsignals beeinflusste gemessene Signal verfälscht ist. Hierzu dient ein Vergleich des erfassten Signals mit einer in der Steuereinheit 14 abgespeicherten Referenzkurve.

Sobald in der Steuereinheit 14 erfasst wird, dass auf der für den seitens der Wechselstromquelle 7 erzeugten Wechselstrom und die Durchgangsfrequenz des Empfangsfilters 13 vorgegebenen bzw. eingestellten Frequenz ein Störsignal vorliegt, werden auf der Grundlage eines vorgebbaren Programms und unter Programmkontrolle eines Mikrocontrollers der Steuereinheit 14 die Frequenz des Wechselstroms und die Durchgangsfrequenz des Empfangsfilters 13 synchron solange verändert, bis wieder ein ungestörtes Signal empfangen wird. Die Bedienvorrichtung 1 weicht quasi auf eine störsignalfreie Frequenz aus.

Des Weiteren sind die Frequenz des Wechselstroms und die Durchgangsfrequenz des Empfangsfilters 13 kontinuierlich und periodisch veränderbar, so dass erfasste Signale bei verschiedenen Frequenzen abgetastet und bewertet werden können. Durch einen in der Steuereinheit 14 stattfindenden internen Vergleich der Messergebnisse bei unterschiedlichen Frequenzen können in einfacher Weise durch Störsignale beaufschlagte Frequenzen erkannt werden.

Mittels Durchführung einer Mehrheitsauswertung in der Steuereinheit 14 können gültige Ausgangssignale derselben nur abgegeben werden, wenn die bei einer definierten Anzahl unterschiedlicher Frequenzen erfolgten Messungen bzw. die dabei erfassten Messsignale das gleiche Messergebnis ergeben.

Der Empfangsfilter 13 der Empfangsspulenanordnung 9 ist im Falle des beschriebenen Ausführungsbeispiels der erfindungsgemäßen Bedienvorrichtung 1 mit einem Synchrongleichrichter versehen.

Bei Durchführung des erfindungsgemäßen Verfahrens zur Erzeugung von Ausgangssignalen der Bedienvorrichtung 1 wird die Geberspule 5 mit Wechselstrom beaufschlagt. Des Weiteren wird die Geberspule 5 in Bezug auf die unter ihr angeordnete Empfangsspulenanordnung 9 bewegt. Hierdurch werden in den Empfangsspulen 10, 11, 12 der Empfangsspulenanordnung 9 sich entsprechend der Bewegung der Geberspule 5 verändernde Signale erzeugt. Die Frequenz des die Geberspule 5 beaufschlagenden Wechselstroms und die Durchgangsfrequenz des Empfangsfilters 13 der Empfangsspulenanordnung werden mittels der Steuereinheit 14 entsprechend dem vorgegebenen Programm synchron verändert. Die synchrone Veränderung der genannten Frequenzen erfolgt zumindest immer dann, wenn seitens der Steuereinheit 14 erfasst wird, dass im Bereich der gerade eingestellten Frequenz Störungen vorliegen.

Im gezeigten Ausführungsbeispiel werden die Frequenz des Wechselstroms und die Durchgangsfrequenz des Empfangsfilters 13 periodisch verändert und entsprechend die seitens der Empfangsspulenanordnung 9 empfangenen Signale bei unterschiedliche Frequenzen erfasst. Ein Ausgangssignal der Bedienvorrichtung 1 wird nur aus solchen erfassten Signalen der Empfangsspulenanordnung 9 erzeugt bzw. errechnet, die bei störungsbzw. störsignalfreien Frequenzen erfasst wurden.

Bei einer weiteren Verfeinerung des erfindungsgemäßen Verfahrens gibt die Bedienvorrichtung 1 nur dann ein Ausgangssignal ab, wenn in der Steuereinheit 14 erfasste Signale der Empfangsspulenanordnung 9 bei einer Mehrzahl unterschiedlicher Frequenzen vorliegen und das gleiche Ergebnis zeigen.

## Patentansprüche

1. Bedienvorrichtung (1) mit einem verstellbaren Hebel (2) und einer Sensorik (8), zu der eine Geberspule (5), die mittels einer Wechselstromquelle (7) mit einem Wechselstrom beaufschlagbar ist, und eine Empfangsspulenanordnung (9) gehören, **dadurch gekennzeichnet, dass** die Frequenz des die Geberspule (5) beaufschlagenden Wechselstroms und die Durchgangsfrequenz eines Empfangsfilters (13) der Empfangsspulenanordnung (9) mittels einer Steuereinheit (14) entsprechend einem vorgebbaren Programm synchron veränderbar sind, und dass die Steuereinheit (14) so gestaltet ist, dass bei einem Auftreten von Störungen bzw. Störsignalen im Bereich einer für den die Geberspule (5) beaufschlagenden Wechselstrom und das Empfangsfilter (13) der Empfangsspulenanordnung (9) eingestellten Frequenz diese Frequenz programmgesteuert solange synchron veränderbar ist, bis eine störungs- bzw. störsignalfreie Frequenz vorliegt.

2. Bedienvorrichtung nach Anspruch 1, bei der die Geberspule (5) am Hebel (2) sitzt und der Hebel (2) in Bezug auf die ortsfeste Empfangsspulenanordnung (9) verstellbar angeordnet ist.

3. Bedienvorrichtung nach Anspruch 2, bei der die Geberspule (5) an einem einem Betätigungsabschnitt (3) des Hebels (2) entgegengesetzten Endabschnitt (4) desselben und die Empfangsspulenanordnung (9) unterhalb dieses Endabschnitts (4) angeordnet ist.

4. Bedienvorrichtung nach einem der Ansprüche 1 bis 3, bei der das Empfangsfilter (13) der Empfangsspulenanordnung (9) extrem schmalbandig ausgelegt und genau auf die Frequenz des die Geberspule (5) beaufschlagenden Wechselstroms abgestimmt ist.

5. Bedienvorrichtung nach einem der Ansprüche 1 bis 4, bei der die Steuereinheit (14) so gestaltet ist, dass die Frequenz des Wechselstroms und des Empfangsfilters (13) periodisch veränderbar ist und dass für die Erzeugung eines Ausgangssignals der Bedienvorrichtung (1) nur bei störungs- bzw. störsignalfreien Frequenzen erfasste Signale der Empfangsspulenanordnung (9) verwertbar sind.

6. Bedienvorrichtung nach einem der Ansprüche 1 bis 5, bei der das Empfangsfilter (13) der Empfangsspulenanordnung (9) einen Synchrongleichrichter aufweist.

7. Bedienvorrichtung nach einem der Ansprüche 1 bis 6, bei der die Wechselstromquelle eine Oszillatorschaltung aufweist.

8. Verfahren zur Erzeugung von Ausgangssignalen einer Bedienvorrichtung (1), bei dem eine Geberspule (5) mit Wechselstrom beaufschlagt wird, und die Geberspule (5) und eine Empfangsspulenanordnung (9) relativ zueinander bewegt werden, so dass in der Empfangsspulenanordnung (9) Signale erzeugt werden, **dadurch gekennzeichnet, dass** die Frequenz des die Geberspule (5) beaufschlagenden Wechselstroms und die Durchgangsfrequenz eines Empfangsfilters (13) der Empfangsspulenanordnung (9) entsprechend einem vorgebbaren Programm synchron verändert werden, und dass bei einem Auftreten von Störungen bzw. Störsignalen die Frequenz des Wechselstroms und des Empfangsfilters (13) programmgesteuert solange synchron verändert wird, bis eine störungs- bzw. störsignalfreie Frequenz eingestellt ist.

9. Verfahren nach Anspruch 8, bei dem die Geberspule (5) mit Wechselstrom mit Signalamplituden von einem bis einigen Volt beaufschlagt wird.

10. Verfahren nach einem der Ansprüche 8 bis 9, bei dem die Frequenz des Wechselstroms und des Empfangsfilters (13) periodisch verändert wird, die Signale der Empfangsspulenanordnung (9) bei den unterschiedlichen Frequenzen erfasst werden und ein Ausgangssignal der Bedienvorrichtung (1) nur aus solchen Signalen der Empfangsspulenanordnung (9) erzeugt bzw. errechnet wird, die bei störungs- bzw. störsignalfreien Frequenzen erfasst werden.

11. Verfahren nach einem der Ansprüche 8 bis 10, bei dem ein Ausgangssignal der Bedienvorrichtung (1) nur erzeugt wird, wenn ein Signal der Empfangsspulenanordnung (9) bei einer vorgebbaren Anzahl unterschiedlicher Frequenzen des Wechselstroms und des Empfangsfilters (13) das gleiche Ergebnis ergibt.

## Claims

1. An operating device (1) with an adjustable lever (2) and with a sensor system (8), which comprises a transmitter coil (5), which is able to be acted upon with an alternating current by means of an alternating current source (7), and a receiver coil arrangement (9), **characterized in that** the frequency of the alternating current acting upon the transmitter coil (5) and the pass frequency of a receiver filter (13) of the receiver coil arrangement (9) are able to be changed synchronously by means of a control unit (14) in accordance with a presettable program, and that the control unit (14) is configured so that in the occurrence of interferences or respectively interference signals in the range of a frequency set for the alternating current acting upon the transmitter coil (5) and the receiver filter (13) of the receiver coil arrangement (9), this frequency is able to be changed synchronously in a program-controlled manner until a frequency is present which is free of interference or respectively free of interference signals.

2. The operating device according to Claim 1, in which the transmitter coil (5) sits on the lever (2) and the lever (2) is arranged so as to be adjustable with respect to the fixed receiver coil arrangement (9).

3. The operating device according to Claim 2, in which the transmitter coil (5) is arranged on an end section (4) of the lever (2) opposite an actuating section (3) thereof, and the receiver coil arrangement (9) is arranged beneath this end section (4).

4. The operating device according to one of Claims 1 to 3, in which the receiver filter (13) of the receiver coil arrangement (9) is designed with an extremely narrow band and is coordinated precisely to the frequency of the alternating current acting upon the transmitter coil (5).

5. The operating device according to one of Claims 1 to 4, in which the control unit (14) is configured so that the frequency of the alternating current and of the receiver filter (13) is able to be changed periodically and that only signals of the receiver coil arrangement (9) captured at frequencies free of interference or respectively free of interference signals are able to be utilized for the generation of an output signal of the operating device (1).

6. The operating device according to one of Claims 1 to 5, in which the receiver filter (13) of the receiver coil arrangement (9) has a synchronous rectifier.

7. The operating device according to one of Claims 1 to 6, in which the alternating current source has an oscillator circuit.

8. A method for the generation of output signals of an operating device (1), in which a transmitter coil (5) is acted upon by alternating current, and the transmitter coil (5) and a receiver coil arrangement (9) are moved relative to one another, so that signals are generated in the receiver coil arrangement (9), **characterized in that** the frequency of the alternating current acting upon the transmitter coil (5) and the pass frequency of an receiver filter (13) of the receiver coil arrangement (9) are changed synchronously according to a presettable program, and that in the case of an occurrence of interferences or respectively interference signals, the frequency of the alternating current and of the receiver filter (13) is changed synchronously in a program-controlled manner until a frequency is set which is free of interference or respectively free of interference signals.

9. The method according to Claim 8, in which the transmitter coil (5) is acted upon by alternating current with signal amplitudes from one to several volts.

10. The method according to one of Claims 8 to 9, in which the frequency of the alternating current and of the receiver filter (13) is changed periodically, the signals of the receiver coil arrangement (9) are captured at the different frequencies, and an output signal of the operating device (1) is generated or respectively calculated only from such signals of the receiver coil arrangement (9) which were captured at frequencies free of interference or free of interference signals.

11. The method according to one of Claims 8 to 10, in which an output signal of the operating device (1) is only generated when a signal of the receiver coil arrangement (9) with a predeterminable number of different frequencies of the alternating current and of the receiver filter (13) yields the same result.

## Revendications

1. Dispositif de commande (1) avec un levier réglable (2) et un système de détection (8), comprenant une bobine émettrice (5), laquelle peut être alimentée par un courant alternatif grâce à une source de courant alternatif (7), ainsi qu'un ensemble de bobines réceptrices (9), **caractérisé en ce que** la fréquence du courant alternatif alimentant la bobine émettrice (5) et la fréquence de passage d'un filtre de réception (13) de l'ensemble de bobines réceptrices (9) peuvent être modifiées à l'aide d'une unité de commande (14) de manière synchrone en fonction d'un programme pouvant être prédéterminé, et **en ce que** l'unité de commande (14) est réalisée de manière à ce que, en cas d'une apparition de perturbations ou de signaux parasites dans une plage d'une fréquence réglée pour le courant alternatif alimentant la bobine émettrice (5) et le filtre de réception (13) de l'ensemble de bobines réceptrices (9), cette fréquence peut être modifiée de manière synchrone de façon commandée par programme jusqu'à ce qu'il y ait une fréquence sans bruits ou signaux parasites.

2. Dispositif de commande selon la revendication 1, dans lequel la bobine émettrice (5) est placée sur le levier (2) et le levier (2) étant disposé de manière réglable par rapport à l'ensemble de bobines réceptrices (9) stationnaire.

3. Dispositif de commande selon la revendication 2, dans lequel la bobine émettrice (5) est disposée sur une partie d'extrémité (4) du levier (2) opposée à une partie d'actionnement (3) de ce même, et l'ensemble de bobines réceptrices (9) étant disposé au-dessous de cette partie d'extrémité (4).

4. Dispositif de commande selon l'une des revendications 1 à 3, dans lequel le filtre de réception (13) de l'ensemble de bobines réceptrices (9) est conçu à bande extrêmement mince et est adapté avec précision à la fréquence du courant alternatif alimentant la bobine émettrice (5).

5. Dispositif de commande selon l'une des revendications 1 à 4, dans lequel l'unité de commande (14) est réalisée de manière à ce que la fréquence du courant alternatif et du filtre de réception (13) puisse être modifiée périodiquement, et de manière à ce que, pour la génération d'un signal de sortie du dispositif de commande (1), on peut seulement exploiter des signaux détectés en cas de fréquences sans bruits ou signaux parasites de l'ensemble de bobines réceptrices (9).

6. Dispositif de commande selon l'une des revendications 1 à 5, dans lequel le filtre de réception (13) de l'ensemble de bobines réceptrices (9) présente un redresseur synchrone.

7. Dispositif de commande selon l'une des revendications 1 à 6, dans lequel la source de courant alternatif présente un circuit oscillateur.

8. Procédé pour la génération de signaux de sortie d'un dispositif de commande (1), dans lequel une bobine émettrice (5) est alimentée avec du courant alternatif, et la bobine émettrice (5) et l'ensemble de bobines réceptrices (9) étant déplacées l'une par rapport à l'autre de sorte que des signaux soient générés dans l'ensemble de bobines réceptrices (9), **caractérisé en ce que** la fréquence du courant alternatif alimentant la bobine émettrice (5) et la fréquence de passage d'un filtre de réception (13) de l'ensemble de bobines réceptrices (9) sont modifiées de manière synchrone en fonction d'un programme pouvant être prédéterminé, et **en ce que**, en cas d'une apparition de bruits ou de signaux parasites, la fréquence du courant alternatif et du filtre de réception (13) est modifiée de manière synchrone de façon commandée par programme jusqu'à ce qu'une fréquence sans bruits ou signaux parasites soit réglée.

9. Procédé selon la revendication 8, dans lequel la bobine émettrice (5) est alimentée avec du courant alternatif avec des amplitudes de signaux d'un volt jusqu'à quelques volts.

10. Procédé selon l'une des revendications 8 à 9, dans lequel la fréquence du courant alternatif et du filtre de réception (13) est modifiée périodiquement, les signaux de l'ensemble de bobines réceptrices (9) étant détectés pour les différentes fréquences, et un signal de sortie du dispositif de commande (1) étant seulement généré ou calculé à partir de ceux des signaux de l'ensemble de bobines réceptrices (9), lesquels ont été détectés pour des fréquences sans bruits ou signaux parasites.

11. Procédé selon l'une des revendications 8 à 10, dans lequel un signal de sortie du dispositif de commande (1) est seulement généré lorsqu'un signal de l'ensemble de bobines réceptrices (9) donne le même résultat en cas d'un certain nombre, pouvant être prédéterminé, de fréquences différentes du courant alternatif et du filtre de réception (13).
